# EUROPÄISCHE PATENTANMELDUNG

(11) **EP 4 524 909 A1**
(43) Veröffentlichungstag der Anmeldung: **19.03.2025**
(21) Anmeldenummer: 23197112.8
(22) Anmeldetag: 13.09.2023
(51) Int. Cl.: G06V 20/56, G06V 20/64

(54) **FLURFÖRDERZEUG UND VERFAHREN ZUM BESTIMMEN EINES VERKEHRSVERHALTENSMUSTERS EINES WEITEREN FLURFÖRDERZEUGS, VERFAHREN ZUM TRAINIEREN EINES NEURONALEN NETZES**

(71) Anmelder: Jungheinrich Aktiengesellschaft, 22047 Hamburg (DE)
(72) Erfinder: PRUTSCH, Alexander, 8042 Graz (AT)
(74) Vertreter: Seemann & Partner Patentanwälte mbB

(57) **Zusammenfassung**

Ein Flurförderzeug (2), aufweisend: einen Scanner (4), der dazu ausgelegt und eingerichtet ist: a) in einem in einer Logistikeinrichtung (110) befindlichen Umgebungsbereich des Flurförderzeugs (2) Scandaten zu erfassen, eine Verarbeitungseinheit (6), die dazu ausgelegt und eingerichtet ist: b) aus den Scandaten eine Punktwolke zu erzeugen, c) ein in der Logistikeinrichtung (110) vorhandenes weiteres Flurförderzeug (112, 114) zu detektieren und eine Fahrzeugposition des erkannten weiteren Flurförderzeugs (112, 114) zu bestimmen, indem eine 3D-Objekterkennung in der Punktwolke durchgeführt wird, wobei der Scanner (4) und die Verarbeitungseinheit (6) ferner dazu eingerichtet sind, die Schritte a) bis c) für mehrere unterschiedliche Zeitpunkte durchzuführen, und wobei die Verarbeitungseinheit (6) ferner dazu ausgelegt und eingerichtet ist: d) ein Situationsbild (8) in Draufsicht durch Projizieren der für die unterschiedlichen Zeitpunkte bestimmten Fahrzeugpositionen (14) in einen Lagerplan der Logistikeinrichtung (110) zu erzeugen, e) ein Verkehrsverhaltensmuster des weiteren Flurförderzeugs (112, 114) durch Bildauswertung des Situationsbilds (8) zu bestimmen, f) einen aus dem Verkehrsverhaltensmuster des weiteren Flurförderzeugs (112, 114) abgeleiteten Fahrzeugaktionsbefehl zu erzeugen und insbesondere einer Fahrzeugsteuerung (20) des Flurförderzeugs (2) bereitzustellen.

## Beschreibung

Die Erfindung betrifft ein Flurförderzeug, welches einen Scanner aufweist, der dazu ausgelegt und eingerichtet ist, in einem in einer Logistikeinrichtung befindlichen Umgebungsbereich des Flurförderzeugs Scandaten zu erfassen und diese einer von dem Flurförderzeug umfassten Verarbeitungseinheit zuzuführen. Die Erfindung betrifft ferner ein Verfahren zum Betreiben eines Flurförderzeugs in einer Logistikeinrichtung, umfassend den Schritt des Erfassens von Scandaten durch Scannen eines Umgebungsbereichs des Flurförderzeugs mit einem Scanner des Flurförderzeugs. Die Erfindung betrifft ebenso ein Verfahren zum Trainieren eines neuronalen Netzes.

In Logistikeinrichtungen werden fahrerlose Flurförderzeuge eingesetzt. Dieser werden auch als AGV (engl.: automated guided vehicle) oder AMR (engl.: autonomous mobile robot) bezeichnet. In vielen Fällen wird ein Mischbetrieb zwischen fahrerlosen Flurförderzeugen und manuell geführten Flurförderzeugen realisiert. Um die fahrerlosen Flurförderzeuge in der Logistikeinrichtung sicher betreiben zu können, sind diese mit verschiedenen Sensoren zur Umfelderkennung und/oder -überwachung ausgerüstet, beispielsweise mit Laser-Scannern, LIDAR-Scannern, Kameras oder einem 3D-Kamerasystem. Das fahrerlose Flurförderzeug erkennt Hindernisse und reagiert auf diese durch entsprechende Eingriffe in die Fahrzeugsteuerung. Zur Kollisionsvermeidung wird in vielen Fällen das fahrerlose Flurförderzeug gestoppt, so dass andere Flurförderzeuge, beispielsweise manuell gesteuerte Flurförderzeuge, ausweichen können. Das fahrerlose Flurförderzeug reagiert also nicht dynamisch auf das Verhalten der anderen Verkehrsteilnehmer in seiner Umgebung.

Anders ist die Situation bei Kraftfahrzeugen, die im öffentlichen Straßenverkehr betrieben werden, und die über eine Funktionalität für autonomes Fahren verfügen. Derartige Kraftfahrzeuge sind im Vergleich zu Flurförderzeugen mit einer erheblich höheren Rechenleistung ausgestattet, was eine umfassende Umfeldanalyse und Verarbeitung der gewonnenen Daten erlaubt. Die in der Umgebung eines solchen Kraftfahrzeugs stattfindende Verkehrssituation kann analysiert werden. Dabei liegt der Fokus derartiger Systeme stets auf der Trajektorienvoraussage der anderen Verkehrsteilnehmer. Ein Ziel der im Straßenverkehr eingesetzten Systeme ist es also, die zukünftige entlang einer Trajektorie stattfindende Bewegung der detektierten Verkehrsteilnehmer, beispielsweise von PKWs, LKWs oder von Fußgängern, vorauszusagen, um so eine vorausschauende Erkennung potenziell kritischer Situationen zu ermöglichen. Das im autonomen Fahrbetrieb befindliche Kraftfahrzeug ist so in der Lage, kritische Verkehrssituationen durch vorausschauendes Fahren zu vermeiden. Für eine solche umfangreiche Analyse der Verkehrssituation und die zugehörige Trajektorienvoraussage fehlt Flurförderzeugen jedoch vielfach die erforderliche Rechenleistung, vor allem dann, wenn vorhandene Flurförderzeuge für den autonomen Fahrbetrieb nachgerüstet werden sollen.

Ein für im Straßenverkehr betriebene Kraftfahrzeuge mit entsprechend hoher Rechenleistung vorgesehenes System geht beispielsweise aus US 11,276,179 B2 hervor. Bei diesem Verfahren werden mit Hilfe von an dem autonomen Fahrzeug vorhandenen Sensoren Sensordaten des Umfelds erfasst. Auf der Grundlage dieser Sensordaten wird ein Mehrkanalbild in Draufsicht erstellt. Dieses Mehrkanalbild umfasst in einem ersten Kanal die Positionen anderer Verkehrsteilnehmer. Neben den Positionen können Geschwindigkeits- und Richtungsinformationen dieser Verkehrsteilnehmer erfasst und in die Karte eingetragen werden. Zu diesem Zweck werden in zeitlicher Abfolge Sensordaten erfasst, aus denen Situationsbilder in Draufsicht erzeugt werden, die die Verkehrssituation zu verschiedenen in der Vergangenheit liegenden Zeitpunkten wiedergeben. Aus den für die verschiedenen Zeitpunkte vorliegenden Situationsbildern kann anhand der in diesen vorhandenen Positionen der anderen Verkehrsteilnehmer auf deren Bewegungsrichtungen und -geschwindigkeiten geschlossen werden.

In einem weiteren Kanal umfasst das Mehrkanalbild die für das im autonomen Fahrbetrieb betriebene Kraftfahrzeug vorgesehene oder geplante Route. In einem dritten Kanal sind Informationen zur Umgebung dieses Kraftfahrzeugs vorhanden, beispielsweise Informationen darüber, ob sich die erfassten Verkehrsteilnehmer in einem kartierten oder nicht kartierten Bereich der Umgebung befinden. Auch Informationen betreffend die Abmessungen der Straßen, auf denen das autonom fahrende Kraftfahrzeug betrieben wird, können im dritten Kanal gespeichert sein.

Die in zeitlicher Abfolge gestaffelten Mehrkanalbilder werden einem maschinell erlernten Modell zugeführt. Bei diesem handelt es sich um ein dreidimensionales neuronales Netz, beispielsweise ein 3D CNN (CNN = engl.: Convolutional Neural Network), welches als Eingangsdaten die in zeitlicher Abfolge gestapelten Bilder erhält. Es müssen Daten der Dimensionen Stapelgröße x Höhe des Bildes x Breite des Bildes x Bildkanäle verarbeitet werden, was eine entsprechende Rechenleistung voraussetzt. Das neuronale Netz stellt ein Vorhersagesystem dar, das so konfiguriert ist, dass zukünftige Bewegungen jedes der erfassten Objekte vorausgesagt werden können. Aus dieser Voraussage leitet das autonom fahrende Kraftfahrzeug eigene Steuerbefehle ab und verhält sich basierend auf dieser Voraussage in der Verkehrsumgebung.

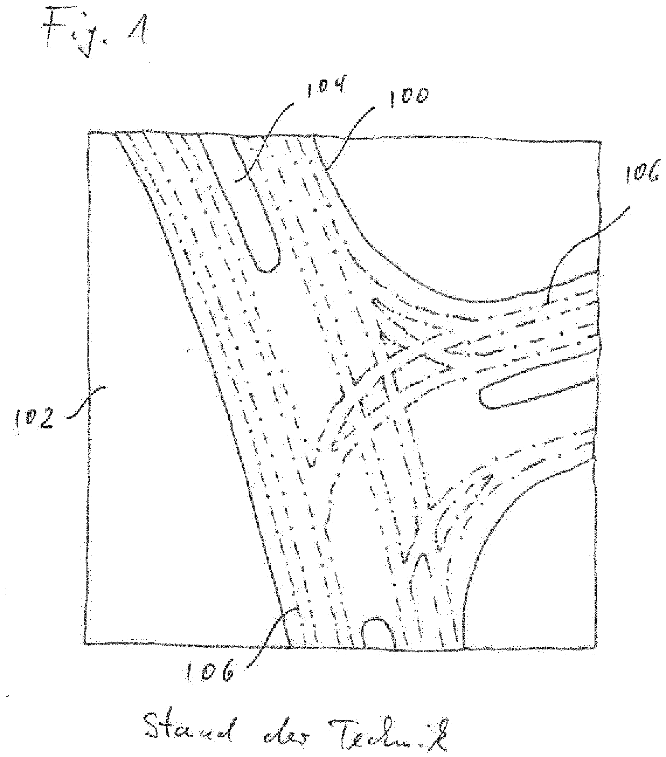

Eine Vorhersage der Route anderer Verkehrsteilnehmer und die hieraus abgeleitete Steuerung des autonom betriebenen Kraftfahrzeugs ist zum einen sehr rechenintensiv, beispielsweise kommen in dem bekannten System drei neuronale Netze zum Einsatz, und erfordert eine entsprechend leistungsfähige Verarbeitungseinheit innerhalb des autonom betriebenen Kraftfahrzeugs. Derart große Rechenleistungen sind in den Bordcomputern von fahrerlosen Flurförderzeugen in vielen Fällen nicht vorhanden und beispielsweise aus wirtschaftlichen Gründen auch nicht vorgesehen. Zum anderen ist die durchgeführte Trajektorienvoraussage, welche maßgeblich der Entscheidung über das eigene Fahrverhalten des autonomen Fahrzeugs zu Grunde liegt, an die Verkehrssituation im Straßenverkehr angepasst. Dies soll kurz anhand von Fig. 1 erläutert werden.

Fig. 1 zeigt einen Straßenplan, wie er der Trajektorienvoraussage in bekannten Systemen für autonomes Fahren gemäß dem Stand der Technik zugrunde gelegt wird. Dargestellt ist eine Kreuzungssituation zweier Straßen. Systeme für das autonome Fahren im Straßenverkehr setzen voraus, dass sich die Verkehrsteilnehmer an die allgemeinen Verkehrsregeln halten. Beispielsweise wird vorausgesetzt, dass der Verkehr lediglich auf den Straßen 100 und nicht auf den daran angrenzenden nichtbefahrbaren Flächen 102, bei denen sich beispielsweise um Grünflächen oder dergleichen handelt, stattfindet. Es wird weiter vorausgesetzt, dass die Verkehrsteilnehmer vorhandene Verkehrsinseln 104 nicht überfahren und der Verkehr richtungsgebunden auf jeweils nur einer der beiden Straßenseiten erfolgt, also beispielsweise Rechtsverkehr oder Linksverkehr vorherrscht. Eine der wichtigsten Randbedingungen ist jedoch die vorausgesetzte mehr oder weniger strikte Einhaltung von Fahrspuren 106, die in Fig. 1 mit strichpunktierter Linie dargestellt sind. Aus Gründen der Übersichtlichkeit sind lediglich einige der Fahrspuren 106 mit Bezugszeichen versehen. Die der Trajektorienvoraussage im Straßenverkehr zugrundeliegenden Modelle orientieren sich sehr stark an den Fahrspuren 106. Die vorausgesagten Trajektorien der von einem autonomen Fahrzeug detektierten anderen Verkehrsteilnehmer liegen dementsprechend in den meisten Fällen in der Mitte einer Fahrspur 106.

Die oben skizzierten und den Modellen für autonomes Fahren im Straßenverkehr zugrundeliegenden Randbedingungen sind für den Verkehr in einer Logistikeinrichtung nicht gegeben. Beispielsweise werden Rechts- oder Linksfahrgebote nicht unbedingt eingehalten oder sind nicht vorgesehen. Sperrbereiche werden mitunter überfahren, also nicht vergleichbar zu den Verkehrsinseln 104 vom Verkehr respektiert. Ein weiterer wichtiger Unterschied besteht jedoch darin, dass in einer Logistikeinrichtung praktisch keine Fahrspuren 106 vorhanden sind oder vorausgesetzt werden können. Flurförderzeuge bewegen sich in einer Logistikeinrichtung mehr oder weniger frei in dem zur Verfügung stehenden Raum.

Außerdem zeigen Flurförderzeuge in Logistikeinrichtungen mitunter ein Fahrverhalten, welches im allgemeinen Straßenverkehr nicht vorkommt. Ein Flurförderzeug, welches vor einem Regal steht, kann beispielsweise dort abgestellt sein oder es kann einen Ein- und Ausstapelvorgang durchführen. Herkömmliche Modelle zur Trajektorienvoraussage versagen in diesem Anwendungsfall, da sie zwischen einem Fahrzeug, welches steht, und einem Fahrzeug, welches im stehendem Zustand eine bestimmte Aufgabe ausführt, nicht unterscheiden.

Im Ergebnis sind aus diesen Gründen Modelle, wie sie für das autonome Fahren im Straßenverkehr eingesetzt werden, für den Einsatz in Logistikeinrichtungen nicht geeignet. Sie liefern in einer Verkehrssituation, wie sie in einer Logistikeinrichtung auftritt, trotz des betriebenen hohen Rechenaufwands keine brauchbaren Ergebnisse.

Es ist eine Aufgabe der Erfindung, ein Flurförderzeug, ein Verfahren zum Betreiben eines Flurförderzeugs sowie ein Verfahren zum Trainieren eines neuronalen Netzes anzugeben, wobei das Flurförderzeug mit geringem Rechenaufwand in die Lage versetzt werden soll, eine Analyse des Verkehrsverhaltens von in einem Umgebungsbereich des Flurförderzeugs vorhandenen weiteren Flurförderzeugen durchzuführen.

Die Aufgabe wird gelöst durch ein Flurförderzeug, aufweisend: einen Scanner, der dazu ausgelegt und eingerichtet ist,
a) in einem in einer Logistikeinrichtung befindlichen Umgebungsbereich des Flurförderzeugs Scandaten zu erfassen,
   eine Verarbeitungseinheit, die dazu ausgelegt und eingerichtet ist:
b) aus den Scandaten eine Punktwolke zu erzeugen,
c) ein in der Logistikeinrichtung vorhandenes weiteres Flurförderzeug zu detektieren und eine Fahrzeugposition des erkannten weiteren Flurförderzeugs zu bestimmen, indem eine 3D-Objekterkennung in der Punktwolke durchgeführt wird,
   wobei der Scanner und die Verarbeitungseinheit ferner dazu eingerichtet sind, die Schritte a) bis c) für mehrere unterschiedliche Zeitpunkte durchzuführen, und wobei die Verarbeitungseinheit ferner dazu ausgelegt und eingerichtet ist:
d) ein Situationsbild in Draufsicht zu erzeugen, durch Projizieren der für die unterschiedlichen Zeitpunkte bestimmten Fahrzeugpositionen in einen Lagerplan der Logistikeinrichtung,
e) ein Verkehrsverhaltensmuster des weiteren Flurförderzeugs durch Bildauswertung des Situationsbilds zu bestimmen,
f) einen aus dem Verkehrsverhaltensmuster des weiteren Flurförderzeugs abgeleiteten Fahrzeugaktionsbefehl zu erzeugen und insbesondere einer Fahrzeugsteuerung des Flurförderzeugs bereitzustellen.

Vorteilhaft erkennt das Flurförderzeug anhand des Situationsbildes die Verkehrssituation. Das Aktionserkennungsproblem kann durch die anhand des Situationsbildes durchgeführte Bildauswertung in ein Bildklassifizierungsproblem überführt werden. Eine Bildklassifizierung, also die Bildauswertung des Situationsbildes, kann mit wesentlich geringerer Rechenleistung durchgeführt werden, als die Vorhersage von Trajektorien. So wird es möglich, die für die Auswertung erforderliche Rechenleistung direkt im Flurförderzeug bereitzustellen. Vorteilhaft ist es ferner möglich, bestehende Flurförderzeuge nachzurüsten und so mit einem verbesserten, auf die jeweilige Verkehrssituation angepassten Fahrverhalten auszustatten. Auf eine Änderung der hierfür erforderlichen Hardware, die die Rechenleistung für diese Funktionalität bereitstellt, kann in vielen Fällen vorteilhaft verzichtet werden.

Die vorgenommene Auswertung ist unter anderem auch deshalb weniger rechenaufwändig, da anders als bei Systemen, die für das autonome Fahren im Straßenverkehr eingesetzt werden, kein Tracking der erfassten weiteren Fahrzeuge notwendig ist. Bei herkömmlichen Systemen müssen in den aufeinanderfolgenden Bildern die detektierten weiteren Fahrzeuge identifiziert werden, damit ihre Bewegung in dem zeitlich geordneten Bilderstapel nachvollzogen und eine zugehörige Trajektorie berechnet werden kann. Dies bedeutet, dass in jedem Bild festgestellt wird, welches der dort vorhandenen Fahrzeuge welchem Fahrzeug im vorausgehenden Bild entspricht. Dieses sogenannte Tracking ist rechenaufwendig. Das Flurförderzeug gemäß Aspekten der Erfindung trägt sämtliche erfasste Fahrzeugpositionen des zumindest einen weiteren Flurförderzeugs in den Lagerplan der Logistikeinrichtung ein und erzeugt so das Situationsbild. Es findet kein Tracking statt, d. h. es wird nicht nachverfolgt, welche Fahrzeugpositionen zu welchem Fahrzeug gehören. Es werden ausschließlich die erfassten Fahrzeugpositionen in den Lagerplan projiziert.

Es ist in diesem Zusammenhang nicht einmal notwendig, jedoch gemäß weiterer Ausführungsformen optional vorgesehen, bei dieser Projektion den Zeitpunkt der Erfassung der entsprechenden Fahrzeugpositionen zu berücksichtigen. Es kann gemäß einer Ausführungsform vorgesehen sein, einfach die während einer bestimmten Zeitspanne erfassten Fahrzeugpositionen in den Lagerplan zu projizieren, auf diese Weise das Situationsbild zu erzeugen, und dieses der Bildauswertung zuzuführen.

Die von der Verarbeitungseinheit des Flurförderzeugs vorgenommene Auswertung ist im Vergleich zu herkömmlichen Positionsbestimmungen nicht nur weniger rechenaufwendig, sondern vor allem bei Anwendung in einer Logistikumgebung auch robuster. Wird beispielsweise ein Fahrzeug zu einem bestimmten Zeitpunkt nicht erfasst, so fehlt bei herkömmlichen Systemen in dem zur Auswertung erforderlichen (zeitlich geordneten) Bilderstapel in einem der Bilder dieses Fahrzeug bzw. die zugehörige Fahrzeugposition. Dieser Fehler stellt das in solchen Systemen erforderliche Tracking vor gewisse Probleme. Auch die sich anschließende Trajektorienvoraussage gelingt möglicherweise aufgrund des fehlenden Messwertes nicht. Eine solche Messsituation kann jedoch in Lagerumgebung, aufgrund der Vielzahl der dort vorhandenen Gegenstände und Hindernisse, beispielsweise Waren oder Regale, durchaus vorkommen. In einem solchen Fall stehen herkömmliche Auswertungsverfahren, welche einen Tracking der detektierten Fahrzeuge voraussetzen, bereits vor gro-ßen Problemen.

Im Gegensatz dazu ist das Flurförderzeug gemäß Aspekten der Erfindung gegenüber solchen teilweise fehlerbehafteten Messungen robust. Aufgrund der Tatsache, dass die unterschiedlichen Fahrzeugpositionen des zumindest einen detektierten Flurförderzeugs alle gemeinsam in einen Lagerplan eingezeichnet werden, aus dem das Situationsbild erzeugt wird, kann auch in einer Situation, in der eine Messwert fehlt, also zu einem Zeitpunkt das Flurförderzeug nicht detektiert werden konnte, immer noch das Verkehrsverhaltensmuster des detektierten Fahrzeugs insgesamt bestimmt werden.

Ferner ist es für die Navigation von Flurförderzeugen in einer Lagerumgebung ausreichend, Verkehrszustände, die in der Vergangenheit liegen, bis hin zum Istzustand, zu analysieren, ohne eine Projektion zukünftiger Trajektorien der Verkehrsteilnehmer zu errechnen. Eine Klassifizierung des Verkehrsverhaltensmusters des erfassten weiteren Flurförderzeugs ist ausreichend und kann beispielsweise die folgenden Klassen umfassen:
- Fahrzeug befindet sich in Ruhe;
- Fahrzeug ist geparkt;
- Fahrzeug wird aufgeladen;
- Fahrzeug wartet;
- Fahrzeug fährt in Geradeausfahrt;
- Fahrzeug führt Abbiegevorgang aus,
- Fahrzeug fährt eine Linkskurve;
- Fahrzeug fährt eine Rechtskurve;
- Fahrzeug führt einen Logistikvorgang aus, beispielsweise
   ∘ Fahrzeug stapelt Waren ein und aus oder
   ∘ Fahrzeug führt einen Kommissioniervorgang aus.

Bei der Durchführung von Logistikvorgängen bewegen sich Flurförderzeuge in bestimmten Mustern. Beispielsweise bleiben die Flurförderzeuge bei der Ausführung eines Logistikvorgangs innerhalb eines beschränkten Aktionsradius und führen wiederholt gleiche oder sehr ähnliche Aktionen durch. Zur Kollisionsvermeidung ist es daher beispielsweise für ein erstes erkanntes Verkehrsverhaltensmuster ausreichend einen bestimmten Mindestabstand zum erfassten Flurförderzeug oder zu einem Betriebsbereich des Flurförderzeugs einzuhalten. Auch der Betriebsbereich kann typischerweise einem Logistikvorgang zugeordnet werden. Unter einem Betriebsbereich soll derjenige Bereich verstanden werden, in dem sich das Flurförderzeug bei der Durchführung des Logistikvorgangs bewegt. Für ein zweites erkanntes Verkehrsverhaltensmuster kann hingegen ein zeitweiliger Stillstand erforderlich sein. Wird ein drittes Verkehrsverhaltensmuster erkannt, kann keine Anpassung des Betriebsverhaltens vorgesehen sind, das Flurförderzeug kann seine Fahrt unverändert fortsetzen.

Der Scanner des Flurförderzeugs ist beispielsweise ein LIDAR-Scanner, Radar-Scanner, eine Kamera oder ein Kamerasystem oder ein 3D-Kamerasystem. Der Lagerplan kann beispielsweise einen Grundriss der Logistikeinrichtung wiedergeben, in dem die statischen Objekte der Logistikeinrichtung eingetragen sind, beispielsweise Fahrwege, Lagerplätze, Langsamfahr-Zonen, Tore, Durchfahrten, Regale usw. Das erstellte Situationsbild umfasst zumindest einen Teil der in dem Lagerplan vorhandenen Informationen, wobei zusätzlich die zeitabhängig erfassten Positionen des detektierten weiteren Flurförderzeugs eingetragen sind. Das Situationsbild ist insbesondere ein pixelbasiertes Bild oder ein ein Belegungsraster umfassendes Bild. Dies vereinfacht die Bildauswertung des Situationsbilds im Hinblick auf das Verkehrsverhaltensmuster des weiteren Flurförderzeugs.

Gemäß einer Ausführungsform ist das Flurförderzeug dadurch fortgebildet, dass die Verarbeitungseinheit dazu ausgelegt und eingerichtet ist, im Rahmen der Bildauswertung des Situationsbildes in Schritt e), eine Merkmalsextraktion von in dem Situationsbild vorhandenen Merkmalen und, insbesondere unter Berücksichtigung der extrahierten Merkmale, eine Klassifizierung der in dem Situationsbild vorhandenen Fahrzeugpositionen vorzunehmen, und das Verkehrsverhaltensmuster des weiteren Flurförderzeugs eine der möglichen Klassifizierungen ist.

Wie bereits weiter oben erwähnt, können verschiedenen Verkehrsverhaltensmustern des Flurförderzeugs jeweils charakteristische Situationsbilder im Lagerplan der Logistikeinrichtung zugeordnet werden - und umgekehrt. Somit ist es in Kenntnis der entsprechenden Situationsbilder möglich, auf ein bestimmtes Verkehrsverhaltensmuster des Flurförderzeugs zu schließen. Die Verhaltensmuster können anhand von bekannten Betriebssituationsbildern trainiert werden. Im Anwendungsfall kann durch Abgleich des Situationsbildes, beispielsweise mit Merkmalen der Betriebssituationsbilder, das Situationsbild im Hinblick auf ein bestimmtes Verkehrsverhaltensmuster des Flurförderzeugs klassifiziert werden. Dieser Abgleich ermöglicht eine einfache und effiziente Klassifizierung des Verkehrsverhaltens des erfassten weiteren Flurförderzeugs. In diesem Zusammenhang muss die Klassifizierung des Verkehrsverhaltens nicht ausschließlich auf der Grundlage der Fahrzeugpositionen durchgeführt werden. Es können für die Klassifizierung zusätzlich aus dem Lagerplan stammenden Merkmale der Logistikeinrichtung berücksichtigt werden. Mit anderen Worten wird die Erkennung des Verkehrsverhaltensmusters der Verkehrsteilnehmer in ein Bildklassifizierungsproblem überführt, welches mit moderatem Rechenaufwand mittels eines vorab trainierten neuronalen Netzes gelöst werden kann. Hierbei sei nochmals betont, dass es hierbei auf die zukünftig befahrene Trajektorie der Verkehrsteilnehmer nicht ankommt.

Gemäß einer Ausführungsform ist das Flurförderzeug dadurch fortgebildet, dass in der Verarbeitungseinheit ein anhand von bekannten Betriebssituationsbildern vortrainiertes neuronales Netz implementiert ist, wobei die Verarbeitungseinheit dazu ausgelegt und eingerichtet ist, zur Bestimmung des Verkehrsverhaltensmusters in Schritt e) das Situationsbild in das vortrainierte neuronale Netz einzugeben, welches trainiert ist, Merkmale aus dem Situationsbild zu extrahieren und, insbesondere unter Berücksichtigung dieser Merkmale, als Klassifizierung das Verkehrsverhaltensmuster des weiteren Flurförderzeugs auszugeben.

Die Klassifizierung erfolgt insbesondere auf der Grundlage von Merkmalen (vielfach auch als "Features" bezeichnet), die aus dem Situationsbild extrahiert werden. Anhand des Zusammenhangs zwischen bestimmten Merkmalen und einer Aktionsklasse, also einer Klasse von Verkehrsverhaltensmustern, kann das neuronale Netz trainiert werden. Beim Training eines solchen Deep Learning Netzes für die Bildklassifizierung werden, wird das Netz auf diese zwei Dinge trainiert, nämlich die Merkmalsextraktion und die Klassifizierung der Verkehrsverhältnisse. Das neuronale Netz wird also darauf konditioniert, die für eine bestimmte Aufgabe relevanten Merkmale zu extrahieren. In der Bildverarbeitung wären das z.B. Ecken, Kanten oder zusammenhängende Regionen. So lernt das Netz, welche Informationen relevant sind und abstrahiert die Eingangsdaten. Darauffolgend wird das neuronale Netz darauf trainiert, welche Merkmale Schlüsse auf welche Klassen ermöglichen.

Umfasst das neuronale Netz beispielsweise ein Netz vom Typ ResNet-18, so extrahiert das ResNet-18 die Merkmale aus dem Situationsbild. In den darauffolgenden Netzwerkschichten des neuronalen Netzes erfolgt die Klassifikation. Mit anderen Worten sind die darauffolgenden Schichten des neuronalen Netzes darauf trainiert, die Klassifikation vorzunehmen.

Der Einsatz eines entsprechend vortrainierten neuronalen Netzes ist besonders vorteilhaft, da dieses speziell auf die Verkehrssituationen, wie sie in einer Logistikeinrichtung auftreten, trainiert werden kann. Verkehrssituationen in einer Logistikeinrichtung unterscheiden sich ihrem Charakter nach von Verkehrssituationen, wie sie im Straßenverkehr auftreten. Für die Erkennung von Verkehrssituationen im Straßenverkehr trainierte und allgemein bekannte neuronale Netze sind in vielen Fällen für die Ausführung mit der in einem Flurförderzeug vorhandenen Rechenleistung zu komplex und umfangreich. Sie erfordern daher eine erhebliche Rechenleistung. Außerdem berücksichtigen solche neuronalen Netze die speziellen, lediglich in einer Logistikeinrichtung auftretenden Verkehrssituationen wie beispielsweise Ein- oder Ausstapelvorgänge, nicht. Beispielsweise können in einer Logistikeinrichtung von den allgemeinen Verkehrsregeln abweichende, gegebenenfalls auch zusätzliche, Regeln festgelegt sein, welche in für den allgemeinen Straßenverkehr trainierten neuronalen Netzen nicht berücksichtigt sind. Beispielsweise sind in einer Logistikeinrichtung weniger Fahrspurmarkierungen vorhanden, als auf öffentlichen Straßen. In der Praxis werden die Verkehrsregeln im Straßenverkehr strenger eingehalten als dies in Logistikeinrichtungen der Fall ist. Die für den öffentlichen Straßenverkehr eingesetzten neuronalen Netze sind hingegen unter der Annahme trainiert, dass sich die Verkehrsteilnehmer an die Verkehrsregeln halten, und sind auch aus diesem Grund für den Einsatz in Logistikumgebungen ungeeignet. Beispielsweise werden in Logistikumgebungen Fahrverbotszonen nicht in der Weise respektiert, wie dies im öffentlichen Straßenverkehr der Fall ist. Auch fehlen in Lagerumgebung Fahrspuren praktisch vollständig.

Das neuronale Netz kann mit Trainingsdaten trainiert sein, die durch Simulation eines virtuellen Lagers gewonnen werden. In diesen Simulationen können beispielsweise verschiedene Verkehrsverhaltensmuster eines Flurförderzeugs simuliert werden. Das Training des neuronalen Netzes kann beispielsweise überwacht erfolgen (supervised training). Trainingsdaten können ebenso aus Aufzeichnungen aus Produktivumgebungen, also durch Messungen, die während des Betriebs eines Flurförderzeugs in einer Logistikeinrichtung durchgeführt werden, gewonnen werden. In diesen Trainingsdaten können verschiedene Verkehrsverhaltensmuster eines Flurförderzeugs durch manuelle Angabe (manuelles Labeling) identifiziert werden, sodass auch auf diese Weise entsprechende Trainingsdaten zur Verfügung gestellt werden.

Das neuronale Netz kann beispielsweise ein Netz vom Typ ResNet-18 mit anschließend 2 Fully Connected-Layern und einem Softmax Layer, also ein neuronales Netz mit insgesamt 21 Schichten sein. Das ResNet-18 ist ein Beispiel für ein geeignetes 2D CNN (CNN = engl.: Convolutional Neural Network).

Es können zur Identifikation des Verkehrsverhaltensmusters im Situationsbild weitere Bildklassifizierungsmodelle genutzt werden.

Vorteilhaft handelt es sich bei dem neuronalen Netz um ein zweidimensionales neuronales Netz, beispielsweise ein 2D CNN (CNN = engl.: Convolutional Neural Network). Dieses empfängt als Eingangsdaten Situationsbilder mit Dimensionen Höhe des Bildes x Breite des Bildes x Kanäle des Bildes. In den Kanälen des Bildes sind beispielsweise die Farbinformationen der Pixel gespeichert. Dieses neuronale Netz hat im Vergleich zu neuronalen Netzen, wie sie bei herkömmlichen Anwendungen zum autonomen Fahren auf öffentlichen Straßen eingesetzt werden, weniger Parameter, insbesondere weniger Netzwerkgewichte, da gelernte Filter nur zweidimensional (2D) sind. Diese herkömmlichen Netze sind nämlich vielfach 3D CNNs, die als Eingangsdaten einen (zeitlich geordneten) Stapel von Bildern empfangen. Die Dimensionen dieser Eingangsdaten sind: Stapelgröße (im Wesentlichen bestimmt durch die zeitliche Ausdehnung des Stapels) x Höhe des Bildes x Breite des Bildes x Kanäle des Bildes (im Wesentlichen bestimmt durch beispielsweise die Farbinformation des Bildes).

Der Lagerplan, auf dessen Grundlage das Situationsbild erzeugt wird, welches anschließend von dem neuronalen Netz ausgewertet wird, basiert beispielsweise auf den Planungsskizzen der Logistikeinrichtung. Es handelt sich beispielsweise um eine vereinfachte und/oder abstrahierte Version einer Planungszeichnung. Objekte, insbesondere das zumindest eine weitere Flurförderzeug, werden in der Punktwolke erkannt, es wird die Position des Objekts ermittelt und in den Lagerplan eingezeichnet.

Der Lagerplan, auf dessen Grundlage das Situationsbild erzeugt wird, kann ebenso aus der mittels des Scanners des Flurförderzeugs erfassten Punktwolke erzeugt werden. Zu diesem Zweck wird in der Punktwolke nicht nur eine 3D-Objekterkennung von Flurförderzeugen durchgeführt, sondern es werden auch Objekte aus der Umgebung des Flurförderzeugs, die der Logistikeinrichtung zuzurechnen sind, erfasst. Beispielsweise werden Objekte ab einer bestimmten Höhe (beispielsweise ab 2m Höhe) detektiert oder es wird eine entsprechende Filterung der Daten der Punktwolke vorgenommen. Bei diesen Objekten handelt es sich um Regale, Durchfahrten, Tore oder dergleichen. Diese Objekte werden auf eine gemeinsame Grundebene, d.h. in Draufsicht projiziert. So kann eine Punktkarte erzeugt werden, die ebenfalls als Grundlage für die Erzeugung des Situationsbildes geeignet ist.

Das Training des neuronalen Netzes erfolgt beispielsweise in einem Backpropagation Algorithmus: Die Trainingsdaten werden in das neuronale Netz eingegeben und es wird ein Fehler (Loss) berechnet. Der Fehler bestimmt sich anhand der Differenz der von dem neuronalen Netz vorhergesagten Labels, also dem identifizierten Verkehrsverhaltensmuster, im Vergleich zu den sogenannten Ground Truth Labels, also dem tatsächlich vorliegenden Verkehrsverhaltensmuster. Anschließend wird eine Aktualisierung (Update) der Netzwerkgewichte über Backpropagation vorgenommen. Die verwendete Fehlerfunktion kann Cross Entropy Loss sein.

Der Einsatz eines speziellen vortrainierten neuronalen Netzes ist also effizient und erhöht die Qualität der Analyse des Verkehrsverhaltensmusters des weiteren Flurförderzeugs.

Das Flurförderzeug kann insbesondere dadurch fortgebildet sein, dass das neuronale Netz trainiert ist, das Verkehrsverhaltensmuster des weiteren Flurförderzeugs anhand der Fahrzeugpositionen des weiteren Flurförderzeugs in dem Situationsbild und zusätzlich anhand von in dem Situationsbild vorhandenen aus dem Lagerplan stammenden Merkmalen der Logistikeinrichtung zu bestimmen.

Eine Situationsanalyse, die nicht ausschließlich auf dem Verhalten des weiteren Flurförderzeugs basiert, sondern auch auf den aus dem Lagerplan stammenden Merkmalen der Logistikeinrichtung, kann aus den folgenden Gründen vorteilhaft sein. Bestimmte Logistikvorgänge werden von Flurförderzeugen lediglich in bestimmten Bereichen der Logistikeinrichtung vorgenommen. Beispielsweise erfolgt ein Ein- oder Ausstapelvorgang stets in der Nähe eines Lagerplatzes oder eines Regals, in dem die ein- und ausgestapelten Waren aufbewahrt werden. Ist also aus dem Situationsbild ein bestimmtes Verhalten des weiteren Flurförderzeugs erkennbar, beispielsweise eine zyklische Bewegung, die auf einen Ein- und Ausstapelvorgang hindeutet, so kann die zusätzliche Information, dass diese Bewegung in der Nähe eines Lagerplatzes oder eines Regals stattfindet, die Zuverlässigkeit der Detektion eines solches Verkehrsverhaltensmusters verbessern. Ein weiteres Beispiel ist ein Flurförderzeug, welches sich in Ruhe befindet. Die zusätzliche Information, dass sich das erfasste weitere Flurförderzeug in der Nähe einer Ladestation aufhält, kann in einem solchen Fall die Zuverlässigkeit der Detektion verbessern. Es wird die Information ausgenutzt, dass berechtigterweise angenommen werden kann, dass sich ein Flurförderzeug, welches sich an einer Ladestation befindet, nicht bewegt.

Gemäß einer weiteren vorteilhaften Ausführungsform ist das Flurförderzeug dadurch fortgebildet, dass die Verarbeitungseinheit dazu ausgelegt und eingerichtet ist, bei der Erzeugung des Situationsbildes in Schritt d) die Fahrzeugpositionen in einen globalen Lagerplan der Logistikeinrichtung zu projizieren und insbesondere zusätzlich einen zumindest die projizierten Fahrzeugpositionen umfassenden Ausschnitt des Lagerplans auszuwählen und der in Schritt e) durchgeführten Bildauswertung zugrunde zu legen.

Es kann ferner vorteilhaft vorgesehen sein, dass der Ausschnitt des Lagerplans auf die projizierten Fahrzeugpositionen zentriert wird, beispielsweise auf eine der ermittelten Fahrzeugposition. Es kann ferner zunächst ein globales Situationsbild mit historischen und aktuellen Fahrzeugpositi-onen erzeugt werden, im Anschluss kann dann ein Ausschnitt für jede Fahrzeugdetektion im aktuellen Frame erstellt werden, wobei jeweils um diese Position herum zentriert werden kann. Diese Ausschnitte des Situationsbildes können als Eingangsdaten des neuronalen Netzes verwendet werden.

Die Verwendung eines globalen Lagerplans der Logistikeinrichtung erlaubt es, ein und denselben Lagerplan für alle in der Logistikeinrichtung betriebenen Flurförderzeuge zu verwenden. Dies senkt den Konfigurationsaufwand für das individuelle Flurförderzeug.

Gemäß einer weiteren vorteilhaften Ausführungsform ist ferner vorgesehen, dass das Flurförderzeug dadurch fortgebildet ist, dass die Verarbeitungseinheit dazu ausgelegt und eingerichtet ist, bei der Erzeugung des Situationsbildes in Schritt d) bei der Projektion der für die unterschiedlichen Zeitpunkte bestimmten Fahrzeugpositionen, die Zeitpunkte der Fahrzeugpositionen durch Bildinformation in deren Darstellung im Situationsbild zu codieren.

Die Fahrzeugpositionen können beispielsweise anhand einer Decckraft ihrer Darstellung, anhand eines Grauwertes, anhand einer Farb- oder Formskala codiert sein. Recht intuitiv ist die Darstellung der Fahrzeugpositionen mit abnehmender Deckkraft, je älter ein Messwert ist, desto stärker verblasst wird dieser dargestellt.

Werden die zeitlich nacheinander erfassten Positionen des Flurförderzeugs ununterscheidbar in das Situationsbild projiziert, beispielsweise als Punkte ohne zusätzliche Information über einen Zeitpunkt, so lassen sich hieraus viele Verkehrsverhaltensmuster des Flurförderzeugs zuverlässig erkennen. Beispielsweise kann erkannt werden, ob sich ein Flurförderzeug in Ruhe oder in Bewegung befindet. Befindet sich das Flurförderzeug in Bewegung, kann eine Bewegungsrichtung ermittelt werden, wobei keine Information über das Vorzeichen der Bewegung ermittelbar ist. Die Information, in welche der beiden möglichen Richtungen entlang der erkannten Bewegungstrajektorie sich das Flurförderzeug bewegt, bleibt bei einer solchen Auswertung offen. Auch wird es in vielen Fällen möglich sein, beispielsweise einen Ein- oder Ausstapelvorgang anhand eines typischen Bewegungsmusters zu erkennen, ohne dass hierzu Informationen darüber notwendig sind, in welcher zeitlichen Abfolge das Flurförderzeug die erkannten Positionen einnimmt.

Zusätzlich kann anhand von Sensordaten die Ausrichtung des Fahrzeugs zu den unterschiedlichen Zeitpunkten erkannt und in das Situationsbild eingetragen werden. Dies kann vorgenommen werden, indem die Fahrzeugpositionen nicht in Form von Punkten, sondern beispielsweise als geometrische Objekte mit einer Vorzugsrichtung, wie Rechtecke, erfolgt.

In manchen Fällen wird es alternativ oder zusätzlich von Interesse sein, auch die zeitliche Abfolge der erkannten Positionen des weiteren Flurförderzeugs der Analyse des Verkehrsverhaltensmusters zugrunde zu legen. Um eine solche Auswertung nach wie vor ausschließlich mit Mitteln der Bildauswertung durchführen zu können, kann die zeitliche Information anhand von Bildinformationen in der Darstellung der Position des weiteren Flurförderzeugs im Situationsbild codiert dargestellt werden. Beispielsweise kann der zeitliche Verlauf der Position anhand verschiedener Grauwerte codiert werden. Hellere Grauwerte könnten auf weiter in der Vergangenheit zurückliegende Positionen hindeuten als dunklere Grauwerte. In gleicher Weise kann die zeitliche Abfolge der Positionen anhand einer zuvor definierten Skala codiert werden, beispielsweise anhand eines Fahrschemas oder anhand einer zuvor festgelegten Abfolge von Formen oder Größen, in der die Positionen dargestellt werden. Vorteilhaft sind kein zusätzliches Teilbild und kein weiterer Layer erforderlich. Die Analyse des Verkehrsverhaltensmusters kann ausschließlich anhand der Bildinformation des Situationsbildes vorgenommen werden.

Gemäß einer weiteren Ausführungsform ist das Flurförderzeug dadurch fortgebildet, dass in der Verarbeitungseinheit ein weiteres vortrainiertes neuronales Netz implementiert ist, und wobei die Verarbeitungseinheit dazu ausgelegt und eingerichtet ist, zur Detektion und Positionsbestimmung des weiteren Fahrzeugs in Schritt c) die Punktwolke in das weitere vortrainierte neuronale Netz einzugeben, welches trainiert ist, als Ausgabe die Fahrzeugposition des weiteren Flurförderzeugs auszugeben.

Auch die in der Punktwolke durchgeführte 3D-Objekterkennung kann vorteilhaft auf der Grundlage eines weiteren vortrainierten neuronalen Netzes erfolgen. Dies ist vorteilhaft, da Spezifika der zu erkennenden Flurförderzeuge gezielt trainiert werden können. Das weitere vortrainierte neuronale Netz kann beispielsweise speziell dafür trainiert sein, einen bestimmten Typ eines Flurförderzeugs zu erkennen.

Gemäß einer Ausführungsform kann beispielsweise auch ein Lastaufnahmemittel detektiert werden. Eine solche Detektion kann Aufschluss über den Betriebszustand des Flurförderzeugs geben. Beispielsweise wird sich dieses mit großer Wahrscheinlichkeit in einem Ein- oder Ausstapelvorgang befinden, wenn das Lastaufnahmemittel nicht vollständig abgesenkt ist. Ferner kann die Detektion des Lastaufnahmemittels eine wertvolle Information darstellen, da beispielsweise aus der Orientierung des Lastaufnahmemittels auf eine bevorzugte Fahrtrichtung des Flurförderzeugs geschlossen werden kann. Auch kann im Bereich des Lastaufnahmemittels ein zusätzlicher Abstand von dem erkannten weiteren Flurförderzeug vorgesehen oder berücksichtigt werden.

Die Aufgabe wird außerdem gelöst durch ein Verfahren zum Betreiben eines Flurförderzeugs in einer Logistikeinrichtung, die folgenden Schritte umfassend:
a) Erfassen von Scandaten durch Scannen eines Umgebungsbereichs des Flurförderzeugs mit einem Scanner des Flurförderzeugs,
b) Erzeugen einer Punktwolke aus den Scandaten,
c) Detektieren von zumindest einem in der Logistikeinrichtung vorhandenen weiteren Flurförderzeug und Bestimmen einer Fahrzeugposition des erkannten weiteren Flurförderzeugs, indem eine 3D-Objekterkennung in der Punktwolke durchgeführt wird,
   Durchführen der Schritte a) bis c) für mehrere unterschiedliche Zeitpunkte,
d) Erzeugen eines Situationsbildes in Draufsicht durch Projizieren der für die unterschiedlichen Zeitpunkte bestimmten Fahrzeugpositionen in einen Lagerplan der Logistikeinrichtung,
e) Bestimmen eines Verkehrsverhaltensmusters des weiteren Flurförderzeugs durch Bildauswertung des Situationsbilds,
f) Erzeugen eines aus dem Verkehrsverhaltensmuster des weiteren Flurförderzeugs abgeleiteten Fahrzeugaktionsbefehls und insbesondere Ausführen des Fahrzeugaktionsbefehls durch das Flurförderzeug.

Auf das Verfahren zum Betreiben des Flurförderzeugs treffen gleiche oder ähnliche Vorteile zu, wie sie bereits im Hinblick auf das Flurförderzeug erwähnt wurden, so dass auf Wiederholungen verzichtet werden soll.

Vorteilhaft ist das Verfahren dadurch weitergebildet, dass die Schritte b) bis f) in einer von dem Flurförderzeug umfassten Verarbeitungseinheit ausgeführt werden.

Da die Auswertung der von dem Flurförderzeug erfassten Umgebung mit geringerer Rechenleistung vorgenommen werden kann, ist es möglich, die genannten Verfahrensschritte in einer von dem Flurförderzeug umfassten Verarbeitungseinheit auszuführen.

Gemäß einer weiteren vorteilhaften Ausführungsform ist das Verfahren dadurch fortgebildet, dass beim Auswerten des Situationsbildes in Schritt e), eine Extraktion von in dem Situationsbild vorhandenen Merkmalen und vorgenommen wird und, insbesondere unter Berücksichtigung der extrahierten Merkmale, eine Klassifizierung der in dem Situationsbild vorhandenen Fahrzeugpositionen vorgenommen wird, wobei die Klassifizierung durch Abgleichen des Situationsbildes mit bekannten Betriebssituationsbildern erfolgt und das Verkehrsverhaltensmuster des weiteren Flurförderzeugs eine der möglichen Klassifizierungen ist.

Gemäß einer weiteren vorteilhaften Ausführungsform ist das Verfahren vorteilhaft dadurch weitergebildet, dass in Schritt e) zur Bestimmung des Verkehrsverhaltensmusters das Situationsbild in ein anhand von bekannten Betriebssituationsbildern vortrainiertes neuronales Netz eingegeben wird, welches trainiert ist, Merkmale aus dem Situationsbild zu extrahieren und, insbesondere unter Berücksichtigung dieser Merkmale, als Klassifizierung das Verkehrsverhaltensmuster des weiteren Flurförderzeugs auszugeben.

Ein solches Verfahren kann vorteilhaft dadurch fortgebildet sein, dass das neuronale Netz trainiert ist, das Verkehrsverhaltensmuster des weiteren Flurförderzeugs anhand der Fahrzeugpositionen des weiteren Flurförderzeugs in dem Situationsbild und zusätzlich anhand von in dem Situationsbild vorhandenen aus dem Lagerplan stammenden Merkmalen der Logistikeinrichtung zu bestimmen.

Gemäß einer weiteren vorteilhaften Ausführungsform ist ferner vorgesehen, dass in Schritt d) die Fahrzeugpositionen in einen globalen Lagerplan der Logistikeinrichtung projiziert werden und insbesondere zusätzlich ein zumindest die projizierten Fahrzeugpositionen umfassender Ausschnitt des Lagerplans ausgewählt und der in Schritt e) durchgeführten Bildauswertung zugrunde gelegt wird.

Ferner ist insbesondere vorgesehen, dass beim Erzeugen des Situationsbildes in Schritt d) beim Projizieren der für die unterschiedlichen Zeitpunkte bestimmten Fahrzeugpositionen, die Zeitpunkte der Fahrzeugpositionen durch Bildinformation in deren Darstellung im Situationsbild codiert werden.

Gemäß einer weiteren Ausführungsform ist vorgesehen, dass in Schritt c) die Punktwolke in ein weiteres vortrainiertes neuronales Netz eingegeben wird, welches trainiert ist, als Ausgabe die Fahrzeugposition des weiteren Flurförderzeugs auszugeben.

Die Aufgabe wird ferner gelöst durch ein Verfahren zum Trainieren eines neuronalen Netzes, bei dem Trainingsdaten in das neuronale Netz eingegeben werden, wobei die Trainingsdaten Situationsbilder in Draufsicht umfassen und die Situationsbilder in einen Lagerplan einer Logistikeinrichtung projizierte Fahrzeugpositionen eines Flurförderzeugs umfassen, wobei die Fahrzeugpositionen eine Position des Flurförderzeugs zu unterschiedlichen Zeitpunkten angeben und der Lagerplan Merkmale der Logistikeinrichtung umfasst, wobei das neuronale Netz darauf trainiert wird, als Ausgangsdaten ein Verkehrsverhaltensmuster des Flurförderzeugs in der Logistikeinrichtung auszugeben.

Im Rahmen des Verfahrens zum Trainieren des neuronalen Netzwerks können beispielsweise virtuelle Trainingsdaten erzeugt werden, die durch Simulation des Verhaltens eines Flurförderzeugs in verschiedenen Verkehrsverhaltensmustern innerhalb einer Logistikumgebung gewonnen werden. Diese virtuellen Trainingsdaten können zum Training des neuronalen Netzes verwendet werden.

Das Training des neuronalen Netzes kann beispielsweise überwacht erfolgen (supervised training).

Die für das Training des neuronalen Netzes verwendeten Trainingsdaten können ebenso aus Aufzeichnungen aus Produktivumgebungen, also durch Messungen, die während des Betriebs eines Flurförderzeugs in einer Logistikeinrichtung durchgeführt werden, gewonnen werden. In diesen Trainingsdaten können verschiedene Verkehrsverhaltensmuster eines Flurförderzeugs durch manuelle Angabe (manuelles Labeling) identifiziert sein.

Das neuronale Netz kann beispielsweise ein Netz vom Typ ResNet-18 mit 2 Fully Connected-Layern und einem Softmax Layer, also ein neuronales Netz mit insgesamt 21 Schichten, sein. ResNet-18 ist ein Beispiel für ein 2D CNN (CNN = engl.: Convolutional Neural Network).

Vorteilhaft handelt es sich bei dem neuronalen Netz um ein zweidimensionales neuronales Netz, beispielsweise ein 2D CNN (CNN = engl.: Convolutional Neural Network). Dieses empfängt als Eingangsdaten Situationsbilder mit Dimensionen Höhe des Bildes x Breite des Bildes x Kanäle des Bildes. In den Kanälen des Bildes sind beispielsweise die Farbinformationen der Pixel gespeichert.

Das Training des neuronalen Netzes erfolgt beispielsweise in einem Backpropagation Algorithmus: Die Trainingsdaten werden in das neuronale Netz eingegeben und es wird ein Fehler (Loss) berechnet. Der Fehler bestimmt sich anhand der Differenz der von dem neuronalen Netz vorhergesagten Labels, also dem identifizierten Verkehrsverhaltensmuster, im Vergleich zu den sogenannten Ground Truth Labels, also dem tatsächlich vorliegenden Verkehrsverhaltensmuster. Anschließend wird eine Aktualisierung (Update) der Netzwerkgewichte über Backpropagation vorgenommen. Die verwendete Fehlerfunktion kann Cross Entropy Loss sein.

Gemäß weiterer Ausführungsformen ist ferner vorgesehen, dass ein nichtflüchtiges, computerlesbares Speichermedium bereitgestellt wird, welches ein vortrainiertes neuronales Netz umfasst, welches nach einem solchen Verfahren trainiert wurde.

Ferner ist gemäß einer weiteren Ausführungsform vorgesehen, dass ein Verfahren zum Umrüsten eines Flurförderzeugs bereitgestellt wird, so dass das umgerüstete Flurförderzeug die Merkmale gemäß Patentanspruch 1 aufweist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Straßenplan, wie er der Trajektorienvoraussage in einem System gemäß dem Stand der Technik für autonomes Fahren im Straßenverkehr zugrunde gelegt wird,
- Fig. 2: ein Flurförderzeug in schematisch vereinfachter Darstellung,
- Fig. 3 bis 5: schematisch vereinfachte Situationsbilder in Draufsicht,
- Fig. 6: ein Situationsbild, welches anhand eines Ausschnitts aus einem globalen Lagerplan erzeugt wurde,
- Fig. 7: ein Situationsbild, welches auf der Grundlage eines Lagerplans erzeugt wurde, der wiederum auf der Grundlage einer Punktwolke erzeugt wurde,
- Fig. 8: ein Ablaufdiagramm eines Verfahrens zum Betreiben eines Flurförderzeugs und
- Fig. 9: eine schematische perspektivische Darstellung einer Betriebssituation in einer Logistikeinrichtung.

In den Zeichnungen sind jeweils gleiche oder gleichartige Elemente und/oder Teile mit denselben Bezugsziffern versehen, so dass von einer erneuten Vorstellung jeweils abgesehen wird.

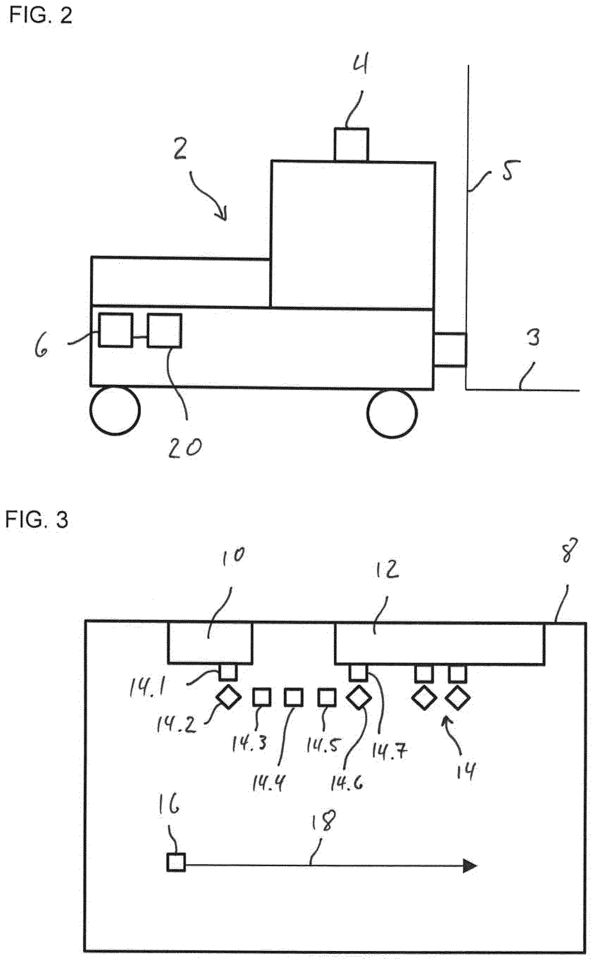

Fig. 2 zeigt schematisch und vereinfacht ein Flurförderzeug 2, welches einen Scanner 4 umfasst, der dazu ausgelegt und eingerichtet ist, in einem Umgebungsbereich des Flurförderzeugs 2 Scandaten zu erfassen. Das Flurförderzeug 2 wird in einer Logistikeinrichtung betrieben, es umfasst zur Aufnahme von Waren ein Lastaufnahmemittel 3, welches entlang eines Hubmastes 5 bewegt werden kann. Der von dem Scanner 4 erfasste Umgebungsbereich befindet sich also innerhalb dieser Logistikeinrichtung, welche nicht näher dargestellt ist. Bei dem Scanner 4 handelt es sich beispielsweise um einen LIDAR-Scanner, einen Laser- oder Radarscanner, ein Kamerasystem, ein 3D-Kamerasystem oder dergleichen. Je nach konkreter Ausgestaltung des Scanners 4 befindet sich dieser an einer oder mehreren geeigneten Positionen am Flurförderzeug 2. Die Darstellung des Scanners 4 ist lediglich schematisch.

Der Umgebungsbereich, in dem Scandaten erfasst werden, ist primär von der Reichweite des verwendeten Scanners 4 abhängig. Das Flurförderzeug 2 umfasst ferner eine Verarbeitungseinheit 6, die dazu ausgelegt und eingerichtet ist, aus den von dem Scanner 4 erfassten Scandaten eine Punktwolke zu erzeugen. Die Verarbeitungseinheit 6 ist ferner dazu ausgelegt und eingerichtet, in der Punktwolke zumindest ein weiteres in der Logistikeinrichtung vorhandenes Flurförderzeug zu detektieren. Zu diesem Zweck ist beispielsweise ein geeignetes weiteres neuronales Netz in der Verarbeitungseinheit 6 implementiert. Dieses weitere vortrainierte neuronale Netz kann speziell darauf trainiert sein, Flurförderzeuge in einer Logistikeinrichtung in einer Punktwolke zu erfassen. Es wird mit anderen Worten eine 3D-Objekterkennung in der Punktwolke durchgeführt, welche bevorzugt, jedoch nicht ausschließlich, unter Verwendung eines entsprechenden vortrainierten neuronalen Netzes erfolgt. Das weitere Flurförderzeug wird nicht nur in der Punktwolke erkannt, es wird auch dessen Fahrzeugposition bestimmt.

Das erfassende Flurförderzeug 2 ist dazu eingerichtet, die Erfassung der Scandaten, die Erzeugung der zugehörigen Punktwolke und die 3D-Objekterkennung, also die Detektion eines weiteren Flurförderzeugs in der Punktwolke und dessen Fahrzeugpositionsbestimmung, für mehrere unterschiedliche Zeitpunkte durchzuführen. Mit anderen Worten erfasst das Flurförderzeug 2 die Position des weiteren Flurförderzeugs, welches sich im Erfassungsbereich des Scanners 4 befindet für mehrere aufeinanderfolgende und in der Vergangenheit liegende Zeitpunkte. Diese Informationen werden in ein Situationsbild 8 übertragen. Das Situationsbild 8 wird von der Verarbeitungseinheit 6 erzeugt, indem die für unterschiedliche Zeitpunkte bestimmten Fahrzeugpositionen 14 in einen Lagerplan der Logistikeinrichtung projiziert werden.

Der Lagerplan kann in der Verarbeitungseinheit 6 des Flurförderzeugs 2 vorliegen. Ebenso kann der Lagerplan aus in der Punktwolke vorhandenen Daten erzeugt werden. Zunächst soll davon ausgegangen werden, dass der Lagerplan in der Verarbeitungseinheit 6 des Flurförderzeugs 2 vorhanden ist.

Fig. 3 zeigt ein solches Situationsbild 8 in einer schematisch vereinfachten Darstellung. Das Situationsbild 8 umfasst dem Lagerplan entnommene statische Objekte der Logistikeinrichtung, beispielhaft einen Lagerplatz 10 und ein Regal 12. In den Lagerplan werden die für die unterschiedlichen Zeitpunkte bestimmten Fahrzeugpositionen 14, jeweils dargestellt als Rechtecke, projiziert.

Die Fahrzeugpositionen werden allgemein mit Bezugszeichen 14 bezeichnet. Es können die Fahrzeugpositionen 14 ohne Berücksichtigung des Erfassungszeitpunkts ununterscheidbar und gleichwertig in das Situationsbild 8 projiziert werden. In einem solchen Fall sind die Fahrzeugpositionen 14, was den Zeitpunkt ihrer Erfassung angeht, voneinander ununterscheidbar. Es ist ebenso möglich, einen Zeitpunkt der Erfassung zu codieren. Dies soll beispielhaft für die Fahrzeugpositionen 14.1 bis 14.7 angenommen werden. Beispielsweise sind die Fahrzeugpositionen in der Reihenfolge 14.1, 14.2, 14.3 ... 14.7 nacheinander zu den Zeitpunkten t1, t2, t3 ... t7 erfasst worden. Die Fahrzeugpositionen 14.1, 14.2, 14.3 ... 14.7 können beispielsweise mit unterschiedlichen Grauwerten oder unterschiedlicher Transparenz oder Deckkraft in das Situationsbild 8 projiziert werden, wobei jedem Grauwert ein Zeitpunkt t1, t2, t3 ... t7 zugewiesen ist. Ist beispielsweise die Fahrzeugposition 14.7 die jüngste Fahrzeugposition und die Fahrzeugposition 14.1 die älteste Fahrzeugposition, so kann der Grauwert von der ältesten Fahrzeugposition 14.1 bis zur jüngsten Fahrzeugposition 14.7 zunehmen, beispielsweise von hellgrau nach dunkelgrau. Diese Information kann bei der Auswertung des Situationsbildes 8 berücksichtigt werden. Beispielsweise beschreiben die Fahrzeugpositionen 14.1 bis 14.7 die Fahrt eines ersten erfassten Flurförderzeugs vom Lagerplatz 10 zum Regal 12. Die weiteren, nicht zeitlich codierten Fahrzeugpositionen 14 zeigen die Fahrt eines zweiten erfassten Flurförderzeugs zwischen verschiedenen Lagerorten des Regals 12.

Anhand des in Fig. 3 gezeigten Situationsbildes 8 kann auf jeweils ein Verkehrsverhaltensmuster des erfassten ersten und zweiten Flurförderzeugs, welche mittels des Scanners 4 erfasst wurden, geschlossen werden. Diese Analyse wird von der Verarbeitungseinheit 6 mittels Bildauswertung des Situationsbildes 8 durchgeführt.

Zu diesem Zweck ist in der Verarbeitungseinheit 6 des Flurförderzeugs 2 beispielsweise ein geeignetes und entsprechend vortrainiertes neuronales Netz vorhanden. Dieses neuronale Netz empfängt ein Situationsbild 8 und ist darauf trainiert, als Ausgabe oder Klassifikation jeweils ein Verkehrsverhaltensmuster der erfassten Flurförderzeuge auszugeben. In diesem Zusammenhang können die Verkehrsverhaltensmuster der weiteren Flurförderzeuge entsprechend einer endlich langen Liste klassifiziert sein. Gemäß dem in Fig. 3 gezeigten Ausführungsbeispiel wäre diese Klassifikation des Verkehrsverhaltensmusters: "Ein- und Ausstapelvorgang", welcher an der gezeigten Position innerhalb der Logistikeinrichtung von dem jeweiligen Flurförderzeug durchgeführt wird.

Das erste Flurförderzeug, dessen Fahrzeugpositionen 14.1, 14.2, 14.3 ... 14.7 erfasst wurden, führt offensichtlich einen Ein- und Ausstapelvorgang zwischen dem Lagerplatz 10 und dem Regal 12 durch. Das zweite Flurförderzeug, dem die nicht zeitabhängig projizierten Fahrzeugpositionen 14 zugeordnet werden können, führt offensichtlich einen Ein- und Ausstapelvorgang zwischen verschiedenen Fächern des Regals 12 durch.

In diesem Zusammenhang können neben den Fahrzeugpositionen 14, die gegebenenfalls unter Berücksichtigung des Zeitpunkts ihrer Erfassung ausgewertet werden, auch die statischen Elemente der Logistikeinrichtung berücksichtigt werden, in diesem Fall der Lagerplatz 10 und das Regal 12. Wird das in Fig. 3 dargestellte Muster an den dargestellten Fahrzeugpositionen 14 erkannt, so gibt die zusätzliche Information, dass sich die Fahrzeugpositionen 14 des ersten Flurförderzeugs zwischen einem Lagerplatz 10 und einem Regal 12 erstrecken, Auskunft darüber, dass es sich mit sehr großer Wahrscheinlichkeit um einen Ein- und Ausstapelvorgang handelt, der von dem ersten erfassten Flurförderzeug durchgeführt wird. Hieraus kann unmittelbar ein Verkehrsverhalten des ersten Flurförderzeugs abgeleitet werden, da berechtigterweise davon ausgegangen werden kann, dass ein Flurförderzeug, dass einen Ein- und Ausstapelvorgang durchführt, seinen Aktionsradius auf einen Bereich beispielsweise zwischen dem Lagerplatz 10 und dem Regal 12 beschränken wird. Gleiches gilt für das Verhaltensmuster des zweiten Flurförderzeugs, dessen Fahrzeugpositionen 14 in der Nähe des Regals 12 liegen. Wird ein solches Muster erkannt, kann berechtigterweise davon ausgegangen werden, dass das entsprechende Flurförderzeug einen Ein- und Ausstapelvorgang zwischen verschiedenen Fächern des Regals 12 vornimmt. Auch hier kann wiederum davon ausgegangen werden, dass dieses Flurförderzeug seinen Aktionsradius auf einen Bereich beschränken wird, der unmittelbar vor dem Regal 12 liegt.

In Fig. 3 ist lediglich zum Zweck der Illustration zusätzlich die aktuelle Position 16 des Flurförderzeugs 2 eingezeichnet. In der gegebenen Situation kann aus dem Verkehrsverhaltensmuster der weiteren Flurförderzeuge abgeleitet werden, dass als Fahrzeugaktionsbefehl für das Flurförderzeug 2 eine Weiterfahrt in der mit einem Pfeil angedeuteten Fahrtrichtung 18 gefahrlos möglich ist. Dieser Fahrzeugaktionsbefehl kann von der Verarbeitungseinheit 6 an eine Fahrzeugsteuerung 20 des Flurförderzeugs 2 übergeben werden. Mit anderen Worten kann das Flurförderzeug 2 in der erkannten Situation seine Fahrt ohne Änderung fortsetzen.

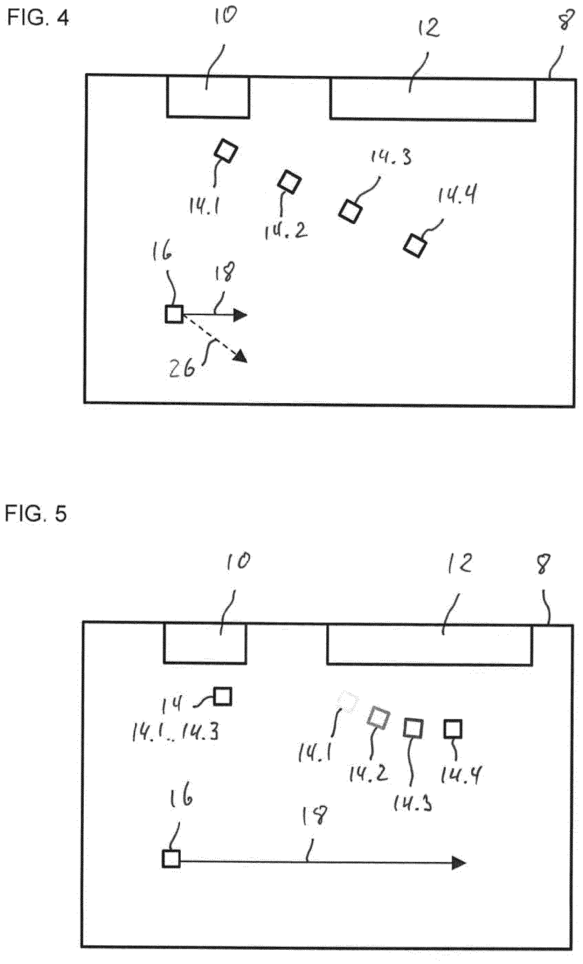

Fig. 4 zeigt ein weiteres Situationsbild 8, welches denselben Ausschnitt der Logistikeinrichtung zeigt wie Fig. 3. Eine Auswertung dieses Situationsbildes 8 ergibt, dass sich das in den Scandaten erfasste weitere Flurförderzeug entlang der detektieren Fahrzeugpositionen 14.1 bis 14.4 bewegt. Werden diese Fahrzeugpositionen ununterscheidbar in den Lagerplan projiziert, so ist das Vorzeichen der Bewegung nicht bestimmbar. Mit anderen Worten ist nicht feststellbar, ob sich das erfasste Flurförderzeug in Richtung des Lagerplatzes 10 oder von dem Lagerplatz 10 wegbewegt. Im dargestellten Ausführungsbeispiel sind die Fahrzeugpositionen 14.1 bis 14.4 zeitlich codiert dargestellt. Anhand dieser Codierung lässt sich bestimmen, dass sich das erfasste Flurförderzeug von dem Lagerplatz 10 wegbewegt.

Ferner ist wiederum lediglich zum Zweck der Illustration in Fig. 4 die aktuelle Position 16 des Flurförderzeugs 2 und seine aktuelle Fahrtrichtung 18 dargestellt. Es ergibt sich aus dieser Darstellung, dass sich die Flurförderzeuge zu nahekommen könnten, und möglicherweise kollidieren. Um das Risiko für eine mögliche Kollision 24 zu minimieren, ist die Verarbeitungseinheit 6 dazu eingerichtet, einen Fahrzeugaktionsbefehl auszugeben, welcher beispielsweise das Flurförderzeug 2 veranlasst, seine Fahrtrichtung 18 in eine neue Fahrtrichtung 26 zu ändern oder aber seine Fahrt zu stoppen oder zu verlangsamen. Das in der Verarbeitungseinheit 6 implementierte neuronale Netz liefert in diesem Zusammenhang lediglich eine Klassifikation der Verkehrssituation. Diese wird beispielsweise in eine weitere in der Verarbeitungseinheit implementierte Steuereinheit eingegeben, welche den Fahrzeugaktionsbefehl erzeugt.

Fig. 5 zeigt ein weiteres Situationsbild 8, welches wiederum den gleichen Ausschnitt der Logistikeinrichtung wie die Fig. 3 und 4 zeigt. Im dargestellten Ausführungsbeispiel ist eine Fahrzeugposition 14 eines ersten Flurförderzeugs gezeigt. Alternativ, und wenn die Fahrzeugpositionen zeitlich codiert dargestellt werden, befindet sich beispielhaft eine erste bis dritte Fahrzeugposition 14.1 bis 14.3 an zumindest näherungsweise dergleichen Position. Ein solches Situationsbild 8 deutet darauf hin, dass sich das erste Flurförderzeug in Ruhe befindet, beispielsweise auf Ware wartet, die am Lagerplatz 10 bereitgestellt wird.

Außerdem sind Fahrzeugpositionen 14.1 bis 14.4 eines weiteren Flurförderzeugs dargestellt. Diese sind zeitlich codiert und aus diesem Grund mit unterschiedlicher Deckkraft dargestellt. Bei der Fahrzeugposition 14.1 handelt es sich um die älteste Fahrzeugposition, welche aus diesem Grund mit geringer Deckkraft dargestellt ist. Bei der Fahrzeugposition 14.4 handelt es sich um die jüngste Fahrzeugposition, welche aus diesem Grund mit der höchsten Deckkraft dargestellt ist. Aus den Fahrzeugpositionen 14.1 bis 14.4 kann darauf geschlossen werden, dass das zweite Flurförderzeug mit relativ geringer Geschwindigkeit eine Linkskurve fährt. Aus den erfassten Verkehrsverhaltensmustern des ersten und zweiten Flurförderzeugs kann das Flurförderzeug 2 ableiten, dass es ausgehend von seiner (wiederum lediglich aus Illustrationszwecken eingezeichneten) aktuellen Position 16 die vorgesehene Fahrtrichtung 18 beibehalten kann.

Die gezeigten Situationsbilder 8 können erhalten werden, indem die Verarbeitungseinheit 6 des Flurförderzeugs 2 bei der Erzeugung der Situationsbilder 8 die Fahrzeugpositionen 14 und gegebenenfalls auch die eigene Position 16 in einen globalen Lagerplan der Logistikeinrichtung projiziert und anschließend einen zumindest die Fahrzeugpositionen 14 umfassenden Ausschnitt, beispielsweise den in den Fig. 2 bis 4 gezeigten Ausschnitt des Lagerplans, auswählt. Dieser ausgewählte Ausschnitt kann der folgenden Bildauswertung zugrunde gelegt werden.

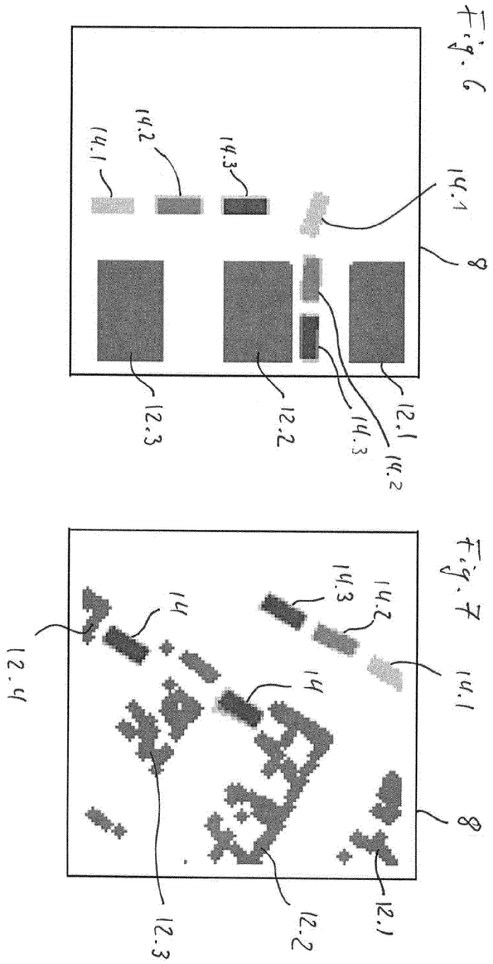

Einen solchen Ausschnitt aus einem globalen Lagerplan zeigt Fig. 6. In dem Situationsbild 8 sind drei Regale 12.1, 12.2 und 12.3 vorhanden. Außerdem sind zwei Flurförderzeuge detektiert worden, deren Fahrzeugpositionen 14.1 bis 14.3 in zeitlich positiver Richtung mit zunehmender Deckkraft eingezeichnet sind. Die jeweils jüngste Fahrzeugposition 14.3 hat also die höchste Deckkraft. Eines der beiden Flurförderzeuge fährt in den Gang zwischen dem ersten und zweiten Regal 12.1 und 12.2 ein. In einer solchen Situation kann es vorkommen, dass eine der Positionen, beispielsweise die Fahrzeugposition 14.2, nicht erfasst wird, da sich das Flurförderzeug zwischenzeitlich an einer Position befindet, die beispielsweise durch das Regal 12.2 verdeckt ist. Auch aus den verbleibenden Fahrzeugpositionen 14.1 und 14.3 ließe sich jedoch mit einiger Wahrscheinlichkeit das entsprechende Verkehrsverhaltensmuster des Flurförderzeugs detektieren. Die Erfassung des entsprechenden Verkehrsverhaltensmusters ist also robust gegenüber Messfehlern.

Fig. 7 zeigt ein weiteres Situationsbild 8 des Lagerplans, in den die Fahrzeugpositionen 14 projiziert werden, ist jedoch nicht im Flurförderzeug 2 vorhanden und beispielsweise auf der Grundlage eines Bauplans oder dergleichen erstellt worden. Der Lagerplan ist gemäß diesem Ausführungsbeispiel auf der Grundlage der Scandaten erstellt worden. Zu diesem Zweck werden beispielsweise erfasste Objekte ab einer bestimmten Höhe, beispielsweise ab einer Höhe von 2 m, auf eine Grundebene projiziert. Es kann bei diesen Objekten mit einiger Wahrscheinlichkeit davon ausgegangen werden, dass es sich um Regale, Wände, Durchfahrtstore oder dergleichen handelt. Beispielhaft umfasst der Lagerplan die Regale 12.1 bis 12.4. Auch auf der Grundlage eines solchen Lagerplans lässt sich das Verkehrsverhaltensmuster der detektierten Flurförderzeuge bestimmen. Wiederum werden zunächst die erfassten Fahrzeugpositionen 14 in den Lagerplan projiziert, um das Situationsbild 8 zu erzeugen Zwei Flurförderzeuge befinden sich offensichtlich in den Gängen zwischen den Regalen 12.2 und 12.3 bzw. 12.3 und 12.4. Es kann berechtigterweise angenommen werden, dass diese Flurförderzeuge in den Regalen Ein- und Ausstapelvorgänge durchführen. Ein weiteres Flurförderzeug fährt an der Stirnseite der Regale 12.1 bis 12.4 entlang. Von diesem Flurförderzeug konnten zeitabhängig die Fahrzeugpositionen 14.1 bis 14.3 erfasst werden.

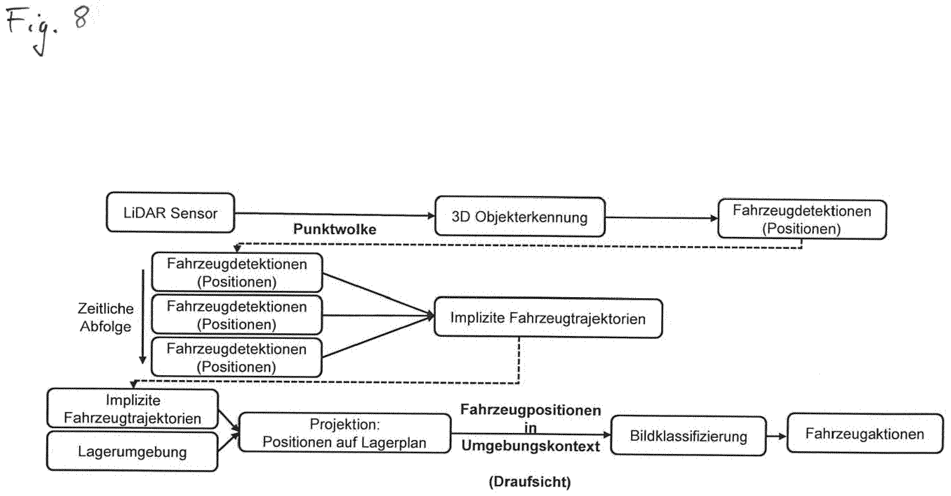

Fig. 8 zeigt ein schematisch vereinfachtes Ablaufdiagramm eines Verfahrens zum Betreiben des Flurförderzeugs 2 in einer Logistikeinrichtung.

In einem ersten Schritt werden Scandaten durch Scannen eines Umgebungsbereichs des Flurförderzeugs 2 mit einem Scanner 4 erfasst. Dieser Schritt ist bezeichnet als "LIDAR-Sensor", da die Scandaten beispielhaft mit einem LIDAR-Sensor als Scanner 4 erfasst werden. Er entspricht Schritt a) des erfindungsgemäßen Verfahrens. Aus den Scandaten wird eine Punktwolke erzeugt, die anschließend einer 3D-Objekterkennung zugeführt wird. Auf der Grundlage dieser 3D-Objekterkennung werden weitere Flurförderzeuge in der Punktwolke detektiert und deren Positionen festgestellt. Dies entspricht den Verfahrensschritten b) und c).

Wie in Fig. 8 mit einem die zeitliche Abfolge andeutenden, nach unten weisenden Pfeil dargestellt, werden die Fahrzeugdetektion und die Positionserkennung mehrfach nacheinander durchgeführt. Dies entspricht der mehrfachen Durchführung der Schritte a) bis c) für mehrere unterschiedliche Zeitpunkte.

Aus dieser Information lässt sich eine sog. "implizite Fahrzeugtrajektorie" ableiten, also eine Bewegung des in der Punktwolke erfassten weiteren Flurförderzeugs im Bezugssystem des erfassenden Flurförderzeugs 2. Die "implizite Fahrzeugtrajektorie" ist nicht zu verwechseln mit einer Trajektorienvoraussage, die in dem Verfahren gemäß Aspekten der Erfindung nicht durchgeführt wird. Die impliziten Fahrzeugtrajektorien werden mit der Lagerumgebung in Korrelation gebracht, was in Fig. 8 durch die übereinander angeordneten Verfahrensschritte "implizite Fahrzeugtrajektorie" und "Lagerumgebung" dargestellt ist. Das Flurförderzeug 2 erfasst die Positionen der anderen Flurförderzeuge in Bezug auf die eigene Position, also im eigenen Koordinatensystem. Um diese im eigenen Koordinatensystem erfassten Fahrzeugpositionen in die Lagerumgebung, also den Lagerplan, projizieren zu können, ist es erforderlich, dass das erfassende Flurförderzeug seinen eigenen Standort bestimmt. So können die zunächst im eigenen Koordinatensystem erfassten Positionen der anderen Flurförderzeuge in das Koordinatensystem der Logistikeinrichtung übertragen werden. Die hierzu erforderliche Standortbestimmung des erfassenden Flurförderzeugs erfolgt beispielsweise anhand der in dem Flurförderzeug 2 zur Verfügung stehenden Sensorik, beispielsweise mit Hilfe eines Positionserfassungssystems, unter gegebenenfalls zusätzlicher Berücksichtigung der Odometrie des Fahrzeugs. Es ist ebenso vorgesehen, dass das Flurförderzeug 2 seine Position innerhalb der Logistikeinrichtung anhand der erfassten Scandaten bestimmt. Hierzu kann das erfassende Flurförderzeug in den Scandaten erfasste Merkmale der Logistikeinrichtung, beispielsweise Regale oder dergleichen, mit einem in dem Flurförderzeug hinterlegten Lagerplan abgleichen.

Anschließend erfolgt die Projektion der erfassten Fahrzeugpositionen 14 in den Lagerplan der Logistikeinrichtung, bezeichnet mit "Projektion: Positionen auf Lagerplan"; dies entspricht Schritt d). Das Ergebnis sind die Fahrzeugpositionen im Umgebungskontext, dargestellt in Draufsicht, also so wie beispielhaft in einem der in den Fig. 3 bis 7 gezeigten Situationsbildern 8 dargestellt. Zum Erzeugen eines Situationsbildes 8, wie es beispielhaft Fig. 7 zeigt, greift das Flurförderzeug nicht auf einen hinterlegten Lagerplan zurück, sondern erzeugt diesen, wie oben erläutert, aus den Scandaten.

Die Situationsbilder 8 werden anschließend einer Bildklassifizierung zugeführt, dies entspricht der Bestimmung des Verkehrsverhaltensmusters des weiteren Flurförderzeugs durch Bildauswertung des Situationsbildes 8 in Schritt e). Aus dem auf diese Weise bestimmten Verkehrsverhaltensmuster des weiteren Flurförderzeugs lässt sich eine Fahrzeugaktion des erfassenden Flurförderzeugs 2 ableiten. Dies entspricht Verfahrensschritt f).

Vorteilhaft können die Schritte b) bis f) in der Verarbeitungseinheit 6 des Flurförderzeugs 2 durchgeführt werden. Dies ist unter anderem möglich, da das Aktionserkennungsproblem in ein Bildklassifizierungsproblem überführt wurde, welches mit vergleichsweise geringerem Aufwand bearbeitet werden kann. Dies erlaubt unter anderem die Auf- oder Umrüstung bestehender Flurförderzeuge, d. h. die Nutzung der in diesen Fahrzeugen vorhandenen Hardware.

Das für die Bestimmung des Verkehrsverhaltensmusters des weiteren Flurförderzeugs verwendete neuronale Netz wird beispielsweise dadurch trainiert, dass Situationsbilder 8 in Draufsicht als Trainingsdaten dem neuronalen Netz zur Verfügung gestellt werden. Das Training des neuronalen Netzes kann überwacht oder unbewacht erfolgen, als Ausgangsklassifikation wird das neuronale Netz darauf trainiert, ein Verkehrsverhaltensmuster des detektierten Flurförderzeugs in der Logistikeinrichtung auszugeben.

Das neuronale Netz kann beispielsweise darauf trainiert werden, das Verkehrsverhaltensmuster in eine der folgenden Klassen einzuordnen:
- Fahrzeug befindet sich in Ruhe;
- Fahrzeug ist geparkt;
- Fahrzeug wird aufgeladen;
- Fahrzeug wartet;
- Fahrzeug fährt in Geradeausfahrt;
- Fahrzeug fährt eine Linkskurve;
- Fahrzeug fährt eine Rechtskurve;
- Fahrzeug führt einen bestimmten Logistikvorgang aus, beispielsweise
   o Fahrzeug stapelt Waren ein und aus oder
   o Fahrzeug führt einen Kommissioniervorgang aus.

Zusätzlich können neben den Fahrzeugpositionen 14 des weiteren Flurförderzeugs, die in dem Situationsbild 8 vorhanden sind, zusätzlich in dem Situationsbild 8 vorhandene Merkmale 10, 12 der Logistikeinrichtung ausgewertet werden. Dies betrifft sowohl die Bestimmung des Verkehrsverhaltensmusters des weiteren Flurförderzeugs als auch die Bestimmung des Fahraktionsbefehls für das Flurförderzeug 2.

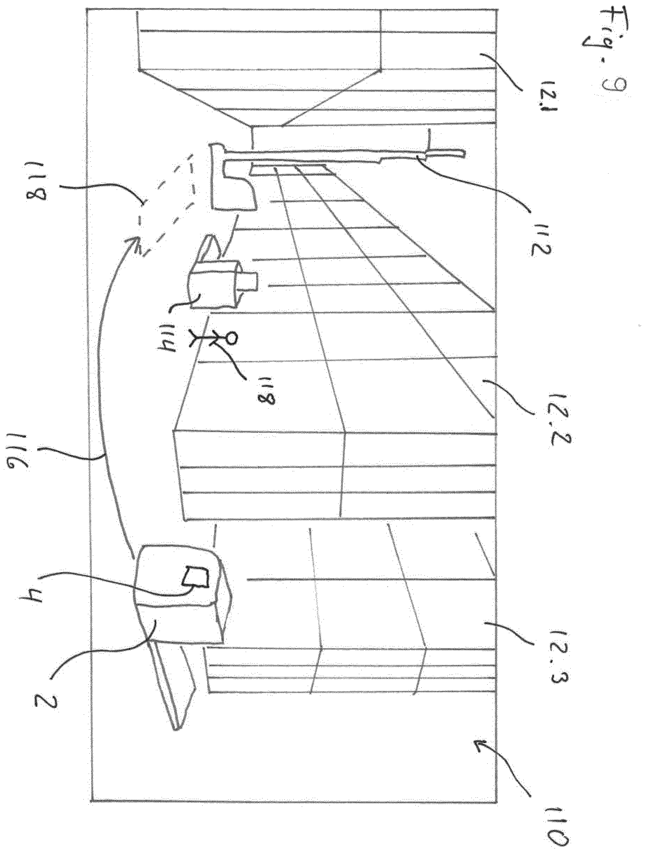

Dies soll anhand von Fig. 9 erläutert werden. Die Figur zeigt eine schematische perspektivische Darstellung einer Betriebssituation in einer Logistikeinrichtung 110. In der Logistikeinrichtung 110 befinden sich mehrere Regale 12.1 bis 12.3 sowie ein erstes weiteres Flurförderzeug 112 und ein zweites weiteres Flurförderzeug 114. Das erste weitere Flurförderzeug 112 führt einen Ein- und Ausstapelvorgang an dem Regal 12.1 durch. Mit dem zweiten weiteren Flurförderzeug 114 führt eine Bedienperson 118 eine Kommissionierung an dem Regal 12.2 durch. Das Flurförderzeug 2 detektiert mit seinem schematisch dargestellten Scanner 4 das erste weitere Flurförderzeug 112, das zweite weitere Flurförderzeug 114 sowie die Regale 12.1, 12.2 und 12.3. Das Flurförderzeug 2 erkennt das Verkehrsverhaltensmuster des ersten weiteren Flurförderzeugs 112, d. h. es erkennt, dass dieses weitere Flurförderzeug 112 einen Ein- und Ausstapelvorgang an dem Regal 12.1 durchführt. Außerdem erkennt das Flurförderzeug 2 das Verkehrsverhaltensmuster des zweiten weiteren Flurförderzeugs 114, nämlich dass dieses an dem Regal 12.2 einen Kommissioniervorgang durchführt.

Das Flurförderzeug 2 legt seiner Auswertung außerdem die Umgebung der weiteren Flurförderzeuge 112, 114 zugrunde. Mit anderen Worten erkennt das Flurförderzeug 2, dass sich die beiden weiteren Flurförderzeuge 112, 114 gemeinsam in einem Gang zwischen den Regalen 12.1 und 12.2 befinden.

Beispielhaft soll angenommen werden, dass das Flurförderzeug 2 beauftragt ist, aus diesem Gang Waren abzuholen, und aus diesem Grund, beispielsweise von einem Warenwirtschaftssystem, den schematisch angedeuteten Fahrweg 116 vorgegeben bekommt. Das Flurförderzeug 2 könnte diesem Fahrweg 116 folgen, bis es an der mit gestrichelter Linie angedeuteten Stoppposition 118 zum Halten kommt. Beispielsweise wird ein Nothalt durchführt, weil sich das erfasste weitere Flurförderzeug 112 dann in einem Sicherheitsbereich des Flurförderzeugs 2 befindet. Es tritt eine Verkehrssituation ein, in der sich die drei beteiligten Flurförderzeuge 2, 112, 114 gegenseitig blockieren und die Navigation aller Fahrzeuge erschweren und, falls alle beteiligten Fahrzeuge automatisch geführt sind, die Verkehrssituation auf der Grundlage der ihnen zur Verfügung stehenden Systeme möglicherweise nicht mehr selbstständig aufgelöst werden kann. Es wäre in letzterem Fall ein Eingreifen eines Logistikmitarbeiters erforderlich, um die Verkehrssituation aufzulösen, indem beispielsweise der Kommissioniervorgang des zweiten weiteren Flurförderzeugs 114 temporär unterbrochen wird und dieses Flurförderzeug den Gang zwischen den Regalen 12.1 und 12.2 verlässt.

Um diese beispielhafte Verkehrssituation vorausschauend zu vermeiden, erhält das Flurförderzeug 2 den Fahraktionsbefehl, an der Position, an der es in Fig. 9 gezeigt ist, aufzustoppen. Das Flurförderzeug 2 wartet beispielsweise bis eines der beiden weiteren Flurförderzeuge 112, 114 den Gang zwischen den Regalen 12.1, 12.2 verlassen hat, um erst anschließend in diesem Gang einzufahren. So kann eine Verkehrssituation vermieden werden, welche einen manuellen Eingriff erfordern würde.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug
- 3: Lastaufnahmemittel
- 4: Scanner
- 5: Hubmast
- 6: Verarbeitungseinheit
- 8: Situationsbild
- 10: Lagerplatz
- 12, 12.1 ... 12.3: Regal
- 14: Fahrzeugposition
- 14.1 ... 14.7: Fahrzeugpositionen
- 16: Position des Flurförderzeugs
- 18: Fahrtrichtung
- 20: Fahrzeugsteuerung
- 22: Trajektorie
- 26: neue Fahrtrichtung
- 100: Straßen
- 102: nichtbefahrbare Flächen
- 104: Verkehrsinseln
- 106: Fahrspuren
- 110: Logistikeinrichtung
- 112: erstes weiteres Flurförderzeug
- 114: zweites weiteres Flurförderzeug
- 116: Fahrweg
- 118: Bedienperson

## Patentansprüche

1. Flurförderzeug (2), aufweisend:
einen Scanner (4), der dazu ausgelegt und eingerichtet ist:
a) in einem in einer Logistikeinrichtung (110) befindlichen Umgebungsbereich des Flurförderzeugs (2) Scandaten zu erfassen, eine Verarbeitungseinheit (6), die dazu ausgelegt und eingerichtet ist:
b) aus den Scandaten eine Punktwolke zu erzeugen,
c) ein in der Logistikeinrichtung (110) vorhandenes weiteres Flurförderzeug (112, 114) zu detektieren und eine Fahrzeugposition des erkannten weiteren Flurförderzeugs (112, 114) zu bestimmen, indem eine 3D-Objekterkennung in der Punktwolke durchgeführt wird,
wobei der Scanner (4) und die Verarbeitungseinheit (6) ferner dazu eingerichtet sind, die Schritte a) bis c) für mehrere unterschiedliche Zeitpunkte durchzuführen, und wobei die Verarbeitungseinheit (6) ferner dazu ausgelegt und eingerichtet ist:
d) ein Situationsbild (8) in Draufsicht zu erzeugen, durch Projizieren der für die unterschiedlichen Zeitpunkte bestimmten Fahrzeugpositionen (14) in einen Lagerplan der Logistikeinrichtung (110),
e) ein Verkehrsverhaltensmuster des weiteren Flurförderzeugs (112, 114) durch Bildauswertung des Situationsbildes (8) zu bestimmen,
f) einen aus dem Verkehrsverhaltensmuster des weiteren Flurförderzeugs (112, 114) abgeleiteten Fahrzeugaktionsbefehl zu erzeugen und insbesondere einer Fahrzeugsteuerung (20) des Flurförderzeugs (2) bereitzustellen.

2. Flurförderzeug (2) nach Anspruch 1, bei dem die Verarbeitungseinheit (6) dazu ausgelegt und eingerichtet ist, im Rahmen der Bildauswertung des Situationsbildes (8) in Schritt e), eine Merkmalsextraktion von in dem Situationsbild (8) vorhandenen Merkmalen und, insbesondere unter Berücksichtigung der extrahierten Merkmale, eine Klassifizierung der in dem Situationsbild (8) vorhandenen Fahrzeugpositionen (14) vorzunehmen, wobei das Verkehrsverhaltensmuster des weiteren Flurförderzeugs (112, 114) eine der möglichen Klassifizierungen ist .

3. Flurförderzeug (2) nach Anspruch 2, bei dem in der Verarbeitungseinheit (6) ein anhand von bekannten Betriebssituationsbildern vortrainiertes neuronales Netz implementiert ist, wobei die Verarbeitungseinheit (6) dazu ausgelegt und eingerichtet ist, zur Bestimmung des Verkehrsverhaltensmusters in Schritt e), das Situationsbild (8) in das vortrainierte neuronale Netz einzugeben, welches trainiert ist, Merkmale aus dem Situationsbild (8) zu extrahieren und, insbesondere unter Berücksichtigung dieser Merkmale, als Klassifizierung das Verkehrsverhaltensmuster des weiteren Flurförderzeugs (112, 114) auszugeben.

4. Flurförderzeug (2) nach Anspruch 3, bei dem das neuronale Netz trainiert ist, das Verkehrsverhaltensmuster des weiteren Flurförderzeugs (112, 114) anhand der Fahrzeugpositionen (14) des weiteren Flurförderzeugs (112, 114) in dem Situationsbild (8) und zusätzlich anhand von in dem Situationsbild (8) vorhandenen aus dem Lagerplan stammenden Merkmalen (10, 12) der Logistikeinrichtung (110) zu bestimmen.

5. Flurförderzeug (2) nach einem der Ansprüche 1 bis 4, bei dem die Verarbeitungseinheit (6) dazu ausgelegt und eingerichtet ist, bei der Erzeugung des Situationsbildes (8) in Schritt d) die Fahrzeugpositionen (14) in einen globalen Lagerplan der Logistikeinrichtung (110) zu projizieren und insbesondere zusätzlich einen zumindest die projizierten Fahrzeugpositionen (14) umfassenden Ausschnitt des Lagerplans auszuwählen und der in Schritt e) durchgeführten Bildauswertung zugrunde zu legen.

6. Flurförderzeug (2) nach einem der Ansprüche 1 bis 5, bei dem die Verarbeitungseinheit (6) dazu ausgelegt und eingerichtet ist, bei der Erzeugung des Situationsbildes (8) in Schritt d) bei der Projektion der für die unterschiedlichen Zeitpunkte bestimmten Fahrzeugpositionen (14.1 ... 14.7), die Zeitpunkte der Fahrzeugpositionen (14.1 ... 14.7) durch Bildinformation in deren Darstellung im Situationsbild (8) zu codieren.

7. Flurförderzeug (2) nach einem der Ansprüche 1 bis 6, bei dem in der Verarbeitungseinheit (6) ein weiteres vortrainiertes neuronales Netz implementiert ist, und wobei die Verarbeitungseinheit (6) dazu ausgelegt und eingerichtet ist, zur Detektion und Positionsbestimmung des weiteren Flurförderzeugs (112, 114) in Schritt c) die Punktwolke in das weitere vortrainierte neuronale Netz einzugeben, welches trainiert ist, als Ausgabe die Fahrzeugposition (14) des weiteren Flurförderzeugs (112, 114) auszugeben.

8. Verfahren zum Betreiben eines Flurförderzeugs (2) in einer Logistikeinrichtung (110), die folgenden Schritte umfassend:
a) Erfassen von Scandaten durch Scannen eines Umgebungsbereichs des Flurförderzeugs (2) mit einem Scanner (4) des Flurförderzeugs (2),
b) Erzeugen einer Punktwolke aus den Scandaten,
c) Detektieren von zumindest einem in der Logistikeinrichtung (110) vorhandenen weiteren Flurförderzeug (112, 114) und Bestimmen einer Fahrzeugposition (14) des erkannten weiteren Flurförderzeugs (112, 114), indem eine 3D-Objekterkennung in der Punktwolke durchgeführt wird,
Durchführen der Schritte a) bis c) für mehrere unterschiedliche Zeitpunkte,
d) Erzeugen eines Situationsbildes (8) in Draufsicht durch Projizieren der für die unterschiedlichen Zeitpunkte bestimmten Fahrzeugpositionen (14) in einen Lagerplan der Logistikeinrichtung (110),
e) Bestimmen eines Verkehrsverhaltensmusters des weiteren Flurförderzeugs (112, 114) durch Bildauswertung des Situationsbildes (8),
f) Erzeugen eines aus dem Verkehrsverhaltensmuster des weiteren Flurförderzeugs (112, 114) abgeleiteten Fahrzeugaktionsbefehls und insbesondere Ausführen des Fahrzeugaktionsbefehls durch das Flurförderzeug (2).

9. Verfahren nach Anspruch 8, bei dem die Schritte b) bis f) in einer von dem Flurförderzeug (2) umfassten Verarbeitungseinheit (6) ausgeführt werden.

10. Verfahren nach Anspruch 8 oder 9, bei dem beim Auswerten des Situationsbildes (8) in Schritt e), eine Extraktion von in dem Situationsbild (8) vorhandenen Merkmalen und vorgenommen wird und, insbesondere unter Berücksichtigung der extrahierten Merkmale, eine Klassifizierung der in dem Situationsbild (8) vorhandenen Fahrzeugpositionen (14) vorgenommen wird, wobei die Klassifizierung durch Abgleichen des Situationsbildes (8) mit bekannten Betriebssituationsbildern erfolgt und das Verkehrsverhaltensmuster des weiteren Flurförderzeugs (112, 114) eine der möglichen Klassifizierungen ist.

11. Verfahren nach einem der Ansprüche 8 bis 10, bei dem in Schritt e) zur Bestimmung des Verkehrsverhaltensmusters das Situationsbild (8) in ein anhand von bekannten Betriebssituationsbildern vortrainiertes neuronales Netz eingegeben wird, welches trainiert ist, Merkmale aus dem Situationsbild (8) zu extrahieren und, insbesondere unter Berücksichtigung dieser Merkmale, als Klassifizierung das Verkehrsverhaltensmuster des weiteren Flurförderzeugs (112, 114) auszugeben.

12. Verfahren nach Anspruch 11, bei dem das neuronale Netz trainiert ist, das Verkehrsverhaltensmuster des weiteren Flurförderzeugs (112, 114) anhand der Fahrzeugpositionen (14) des weiteren Flurförderzeugs (112, 114) in dem Situationsbild (8) und zusätzlich anhand von in dem Situationsbild (8) vorhandenen aus dem Lagerplan stammenden Merkmalen (10, 12) der Logistikeinrichtung (110) zu bestimmen.

13. Verfahren nach einem der Ansprüche 8 bis 12, bei dem beim Erzeugen des Situationsbildes (8) in Schritt d) beim Projizieren der für die unterschiedlichen Zeitpunkte bestimmten Fahrzeugpositionen (14.1 .. 14.7), die Zeitpunkte der Fahrzeugpositionen (14.1 .. 14.7) durch Bildinformation in deren Darstellung im Situationsbild (8) codiert werden.

14. Verfahren nach einem der Ansprüche 8 bis 13, bei dem in Schritt c) die Punktwolke in ein weiteres vortrainiertes neuronales Netz eingegeben, welches trainiert ist, als Ausgabe die Fahrzeugposition (14) des weiteren Flurförderzeugs (112, 114) auszugeben.

15. Verfahren zum Trainieren eines neuronalen Netzes, bei dem Trainingsdaten in das neuronale Netz eingegeben werden, wobei die Trainingsdaten Situationsbilder (8) in Draufsicht umfassen und die Situationsbilder (8) in einen Lagerplan einer Logistikeinrichtung (110) projizierte Fahrzeugpositionen (14) eines Flurförderzeugs umfassen, wobei die Fahrzeugpositionen (14) eine Position des Flurförderzeugs zu unterschiedlichen Zeitpunkten angeben und der Lagerplan Merkmale (10, 12) der Logistikeinrichtung (110) umfasst, wobei das neuronale Netz darauf trainiert wird, als Ausgangsdaten ein Verkehrsverhaltensmuster des Flurförderzeugs in der Logistikeinrichtung (110) auszugeben.
